# EUROPÄISCHE PATENTSCHRIFT

(11) **EP 1 512 937 B1**
(45) Veröffentlichungstag und Bekanntmachung des Hinweises auf die Patenterteilung: **18.06.2008**
(21) Anmeldenummer: 04021163.3
(22) Anmeldetag: 06.09.2004
(51) Int. Cl.: G01B 7/14, B60Q 1/10

(54) **Vorrichtung zur Erfassung der Position eines ersten Fahrzeugteils in Bezug auf ein zweites Fahrzeugteil, insbesondere zur Bestimmung der Nickposition eines Fahrzeuges und Fahrzeug mit einer derartigen Vorrichtung**
Device for determining the position of a first vehicle component relative to a second one, in particular for determining the pitch of a vehicle, and vehicle fitted with such a device
Dispositif pour déterminer la position d'un élément d'un véhicule par rapport à un deuxième élément, en particulier pour déterminer le tangage d'un véhicule, et véhicule équipé d'un tel dispositif

(30) Priorität: 05.09.2003 DE 10341485
(43) Veröffentlichungstag der Anmeldung: 09.03.2005
(73) Patentinhaber: Casco Schoeller GmbH, 60437 Frankfurt am Main (DE)
(72) Erfinder: Kühnel, Wolfgang, Dr.-Ing., 60488 Frankfurt am Main (DE)
(74) Vertreter: Luderschmidt, Schüler & Partner

(56) Entgegenhaltungen:
- DE-A1- 19 918 404

## Beschreibung

Die Erfindung betrifft eine Vorrichtung zur Erfassung der Position eines ersten Fahrzeugteils in bezug auf ein zweites Fahrzeugteil, insbesondere zur Bestimmung der Nickposition eines Fahrzeuges für die Regulierung der Leuchtweite der Fahrzeugscheinwerfer sowie ein Fahrzeug mit einer Einrichtung zur Regulierung der Leuchtweite der Fahrzeugscheinwerfer und einer Vorrichtung zur Bestimmung der Nickposition des Fahrzeuges.

Die Leuchtweite der Scheinwerfer eines Fahrzeuges, beispielsweise eines Pkws, ist von der Neigung des Fahrzeuges in bezug auf die Oberfläche des Geländes abhängig, die als Nickposition des Fahrzeugs bezeichnet wird. Die Nickposition des Fahrzeugs ändert sich zum einen beim Beschleunigen und Abbremsen und zum anderen beim Beladen des Fahrzeuges. Zur Bestimmung der Nickposition eines Fahrzeuges sind Vorrichtungen bekannt, die über eine Einrichtung zur Erfassung der Position eines ortsfesten Fahrzeugteils in bezug auf ein bewegliches Fahrzeugteil erfassen. Insbesondere wird die Position des Querlenkers in bezug auf das Fahrzeugchassis erfasst. Zur Erfassung der Position des Querlenkers in bezug auf das Chassis verfügen die bekannte Vorrichtungen zur Bestimmung der Nickposition über einen oder mehrere Dreh-Potentiometer (HALL-Potentiometer).

Bei kleinem Kippwinkel übt der Querlenker bezüglich des Chassis eine weitgehende lineare Bewegung aus. Nachteilig ist, dass die Positionserfassung des Querlenkers mit einem Dreh-Potentiometer, das nicht eine lineare Bewegung, sondern eine Drehbewegung ausübt, eine relativ aufwendige mechanische Ankopplung erforderlich macht. Neben dem verhältnismäßig großen konstruktiven Aufwand hat sich die mechanische Ankopplung in der Praxis als relativ störanfällig erwiesen. Insbesondere ergeben sich Probleme bei Verschmutzung und Vereisung.

Die bekannten Vorrichtungen zur Bestimmung der Nickposition machen im Allgemeinen von mehreren Dreh-Potentiometern Gebrauch, mit denen die Position eines der beiden vorderen und hinteren Querlenker des Fahrzeugs in bezug auf das Chassis bestimmt wird. Aus der Position der einzelnen Querlenker bezüglich des Chassis wird dann die Nickposition des Fahrzeug in einem Steuergerät ermittelt, das Stellmotoren zur Einstellung der Position der Scheinwerfer ansteuert. Da mehrere Dreh-Potentiometer mit der relativ aufwendigen mechanischen Ankopplung zum Einsatz kommen, nimmt der gesamte konstruktive Aufwand und die Störanfälligkeit noch zu.

Die DE 38 39 427 C2 beschreibt eine Vorrichtung zur automatischen Regelung der Leuchtweite der Scheinwerfer von Kraftfahrzeugen, die über Differenzvariometer verfügt, die an den Achsen des Fahrzeugs angeordnet sind. In Abhängigkeit von der Nickbewegung des Fahrzeugs verändert sich die Induktivität der Variometer, die zur Einstellung der Leuchtweite der Scheinwerfer herangezogen wird. Nachteilig, dass die Differenzvariometer relativ aufwendig in der Herstellung sind.

Aus der DE 102 21 873 A1 sind Gummilager mit HALL-Sensoren bekannt, mit denen eine Magnetfeldänderung detektiert wird, wenn sich der Aussen- und Innenring des Gummilagers zueinander bewegen.

Die DE 199 18 404 A1 beschreibt eine Vorrichtung zur Einstellung der Leuchtweite von Fahrzeugscheinwerfern, die eine Erregerspule zum Erzeugen eines Wechselmagnetfeldes und eine Aufnahmespule zum Detektieren des Magnetfeldes aufweist. Da die Vorrichtung über zwei Spulen verfügt, ist die Herstellung und Montage relativ aufwendig.

Die DE 94 12 765 U1 und DE 37 35 694 C2 beschreiben berührungslos arbeitende elektronische Schaltgeräte, die das Unterschreiten bzw. Überschreiten einer vorgegebenen Distanz detektieren. Derartige Schaltgeräte sind auch als induktive Nährungsschalter bekannt.

Der Erfindung liegt die Aufgabe zugrunde, eine Vorrichtung zur Erfassung der Position eines ersten Teils in bezug auf ein zweites Teil anzugeben, die mit verhältnismäßig geringem schaltungstechnischen Aufwand störungsfrei arbeitet.

Darüber hinaus liegt der Erfindung die Aufgabe zugrunde, eine zuverlässig arbeitende Vorrichtung zu schaffen, die ohne hohen konstruktiven Aufwand die Bestimmung der Nickposition eines Fahrzeugs erlaubt. Eine weitere Aufgabe der Erfindung ist, ein Fahrzeug anzugeben, bei dem die Leuchtweite der Fahrzeugscheinwerfer ohne großen konstruktiven Aufwand störungsfrei in Abhängigkeit von der Nickposition reguliert wird.

Die Lösung dieser Aufgaben erfolgt erfindungsgemäß mit den in den Patentansprüchen 1 und 9 angegebenen Merkmalen. Bevorzugte Ausführungsformen sind Gegenstand der Unteransprüche.

Bei der erfindungsgemäßen Vorrichtung zur Bestimmung der Nickposition eines Fahrzeuges ist die Einrichtung zur Erfassung der Position des ersten Fahrzeugteils in bezug auf das zweite Fahrzeugteil, die von der Nickposition des Fahrzeuges abhängig ist, ein induktives Messsystem zum berührungslosen Bestimmen des Abstandes zwischen beiden Fahrzeugteilen. Das induktive Messsystem weist eine Sensorinduktivität auf, die an einem der beiden Fahrzeugteile anzuordnen ist. Da das induktive Messsystem berührungslos arbeitet, ist eine mechanische Ankopplung nicht erforderlich. Dadurch ist der konstruktive Aufwand gering. Auch ergeben sich keine Probleme bei Verschmutzung und Vereisung.

Bei dem induktiven Messsystem handelt es sich um ein Messsystem, bei dem die Sensorinduktivität Teil eines elektrischen Schwingkreises ist, dessen Güte (Dämpfung) durch den Messabstand x zwischen der Sensorinduktivität und einem metallischen Gegenstand (Target) bestimmt wird. Zur Signalauswertung wird die Amplitudenänderung der elektrischen Schwingung des Schwingkreises in Abhängigkeit vom Targetabstand genutzt.

Vorzugsweise besteht das Target aus einer ebenen Metallfläche. Nicht ferromagnetische Materialien, wie z.B. Kunststoffe, organische Materialien oder die meisten Flüssigkeiten beeinflussen die Güte (Dämpfung) des Schwingkreises hingegen nicht. Daher werden diese Materialien oder Flüssigkeiten nicht erkannt. Wenn das jeweilige Fahrzeugteil als solches nicht metallisch sein sollte, kann an dem Fahrzeugteil auch ein Metallteil angebracht werden.

Die Bezugnahme auf "eine" Sensorinduktivität ist nicht dahingehend zu verstehen, dass die Positionserfassungseinrichtung nur eine einzige Sensorinduktivität aufweist. Vielmehr kann die Positionserfassungseinrichtung auch mehrere Sensorinduktivitäten aufweisen. In der einfachsten Ausführungsform weist die Positionserfassungseinrichtung nur eine einzige Sensorinduktivität auf, mit der die relative Bewegung von nur zwei Fahrzeugteilen erfasst wird. Eine höhere Messgenauigkeit wird aber dann erreicht, wenn die Positionserfassungseinrichtung mehrere Sensorinduktivitäten aufweist.

Die Positionserfassungseinrichtung weist einen frei schwingenden Oszillator auf, der einen die Sensorinduktivität enthaltenden Schwingkreis aufweist. Vorzugsweise ist der Schwingkreis eine Parallelschaltung aus der Sensorinduktivität und einer Kapazität. Der Schwingkreis kann aber auch eine Serienschaltung von Induktivität und Kapazität aufweisen.

Die Sensorinduktivität ist vorzugsweise eine Ringspule, die in einem halboffenen Schalenkern angeordnet ist. Es sind aber auch andere Bauformen möglich. Bei der Ringspule in dem halboffenen Schalenkern ist der maximale Messabstand dadurch gegeben, dass das Target nicht mehr im Einflussbereich der aus der Schalenkernoberfläche austretenden magnetischen Feldlinien liegt. Die Ringspule im halboffenen Schalenkern erlaubt eine Detektion des Target auch dann, wenn der Messabstand relativ groß ist.

Dabei kann die Empfindlichkeit durch die Wahl eines besonders geeigneten Ferritmaterials noch erhöht werden.

Der frei schwingende Oszillator weist Mittel zur Entdämpfung des Schwingkreises und Mittel zur Anregung des Schwingkreises auf. Die Mittel zur Entdämpfung des Schwingkreises weisen einen Verstärker auf, wobei der Schwingkreis in die Gegenkopplung des Verstärkers geschaltet ist, während die Mittel zur Anregung des Schwingkreises einen zwischen den Ausgang und Eingang des Verstärkers geschalteten Rückkopplungszweig aufweisen, der Mittel zum Erzeugen eines Rechteckspannungssignals aus einem Wechselspannungssignal enthält.

Der Oszillator stellt ein selbstanlaufendes und selbstschwingendes System dar. Dadurch wird ermöglicht, dass die Oszillation der elektrischen Schwingung immer auf Resonanzfrequenz stattfindet. Die Wechselstromeinspeisung der Sensorinduktivität entspricht der Funktion einer echten Stromquelle. Dadurch kann zum einen erreicht werden, dass die elektrische Schwingung an der Sensorinduktivität selbst bei maximal auftretender Dämpfung - entsprechend minimalem Messweg - permanent vorhanden ist. Da die Schwingung selbst bei maximaler Dämpfung noch aufrecht erhalten wird, handelt es sich bei dem schwingungsfähigen System um einen nicht-abreißenden Oszillator. Des weiteren kann das Messsignal als Wechselspannungssignal hochomig an dem Schwingkreis abgegriffen werden. Dadurch wird eine elektrische Trennung der Einspeisung und des Signalabgriffs an den jeweils gleichen Klemmen der Sensorinduktivität erreicht. Die Einspeisung kann somit über eine Stromquelle und der Abgriff über eine Spannungsmessung erfolgen.

Die Stromeinprägung in die Sensorinduktivität wird dadurch erreicht, dass der LC-Parallelschwingkreis, der in der Gegenkopplung des Verstärkers liegt, von dem Rechteckspannungssignal, das aus dem Wechselspannungssignal erzeugt wird, angesteuert wird. Da das Rechtecksignal ein Signal mit konstanter Amplitude ist, ist auch der Strom im Schwingkreis konstant.

Bei einer weiteren besonders bevorzugten Ausführungsform weisen die Mittel zum Erzeugen des Rechteckspannungssignals aus dem Wechselspannungssignal einen Pulsformer und einen Treiber auf, die in Serie geschaltet sind.

Eine weitere besonders bevorzugte Ausführungsform sieht eine Auswertschaltung vor, die aus dem vom Oszillator erzeugten Wechselspannungssignal das mit der Nickposition des Fahrzeug korrelierende elektrische Messsignal erzeugt. Die Auswertsschaltung weist vorzugsweise Mittel zum Gleichrichten des Wechselspannungssignals auf. Wenn die gewonnene Mess-Gleichspannung temperaturabhängig ist und über den Messweg nicht linear verläuft, kann die Auswertsschaltung Mittel zur Linearisierung und/oder Temperaturkompensation aufweisen, die vorzugsweise einen Mikrocontroller umfassen. Mit dem Mikrocontroller können die für die Linearisierung und Temperaturkompensation nötigen Operationen einfach realisiert werden.

Das Messsignal wird vorzugsweise über eine Schnittstelle bereitgestellt. In der Auswertsschaltung ist auch eine Codierung des Ausgangssignal in Form von digitalen Modulationsverfahren, beispielsweise PCM (Puls Code Modulation), insbesondere PWM (Puls Width Modulation) möglich. Es ist auch eine Datenübertragung über geeignete Bus-Systeme, beispielsweise CAN (Controller Area Network) und LIN (Lokal Interconnection Network), aber auch LAN (Lokal Area Network) oder andere Netzwerke möglich. Auch ist ein Übergang von einer drahtgebundenen, elektrischen zu einer optischen Signalübertragung mit Lichtwellenleitern möglich.

Das erfindungsgemäße Fahrzeug mit einer Einrichtung zur Regulierung der Leuchtweite der Fahrzeugscheinwerfer in Abhängigkeit von der Nickposition des Fahrzeug verfügt über die erfindungsgemäße Vorrichtung zur Bestimmung der Nickposition. Die Sensorinduktivität wird vorzugsweise an einem in bezug auf die horizontale Ebene des Fahrzeugs als Bezugsebene ortsfesten Fahrzeugteil angeordnet, wobei der Abstand zu einem gegenüber der Bezugsebene beweglichen Fahrzeugteil gemessen wird, das ein Metallteil ist.

Eine bevorzugte Ausführungsform sieht vor, dass das bewegliche Fahrzeugteil ein der Sensorinduktivität gegenüberliegender Querlenker des Fahrzeugs ist. Die Sensorinduktivität wird vorzugsweise am Fahrzeugchassis angeordnet. Die Abstandsmessung führt in der Praxis zu ausreichend genauen Messergebnissen, da die Relativbewegung von Querlenker und Chassis gering sind. Obwohl der Querlenker eine Kippbewegung ausübt, kann die Kippbewegung aufgrund des kleinen Kippwinkels mit ausreichender Genauigkeit durch eine Linearbewegung approximiert werden.

Grundsätzlich ist es aber auch möglich, die Sensorinduktivität an einem gegenüber der Bezugsebene beweglichen Fahrzeugteil anzuordnen, wobei das ortsfeste Fahrzeugteil metallisch ist.

Auch wenn die Oszillatorschaltung zur berührungslosen Bestimmung des Abstandes nur in Verbindung mit einer Vorrichtung zur Bestimmung der Nickposition eines Fahrzeug beschrieben wird, ist die Oszillatorschaltung auch als solche von selbständiger erfinderischer Bedeutung.

Im Folgenden wird die Erfindung unter Bezugnahme auf die Zeichnungen näher erläutert.

Es zeigen:
- Figur 1: ein vereinfachtes Blockschaltbild mit den wesentlichen Komponenten der Vorrichtung zur Bestimmung der Nickposition eines Fahrzeug, die einen Oszillator mit einem Schwingkreis und eine Auswertschaltung umfasst,
- Figur 2: eine detaillierte Darstellung die Oszillatorschaltung der Vorrichtung von Figur 1 in leicht modifizierter Form,
- Figur 3: die Signalverläufe von VOUT und VSIN und VRE als Funktion der Zeit in Abhängigkeit vom Abstand des Target und
- Figur 4: eine stark vereinfachte schematische Darstellung eines Fahrzeugs mit einer Einrichtung zur Regulierung der Leuchtweite der Fahrzeugscheinwerfer in Abhängigkeit von der Nickposition des Fahrzeug und einer Vorrichtung zur Bestimmung der Nickposition.

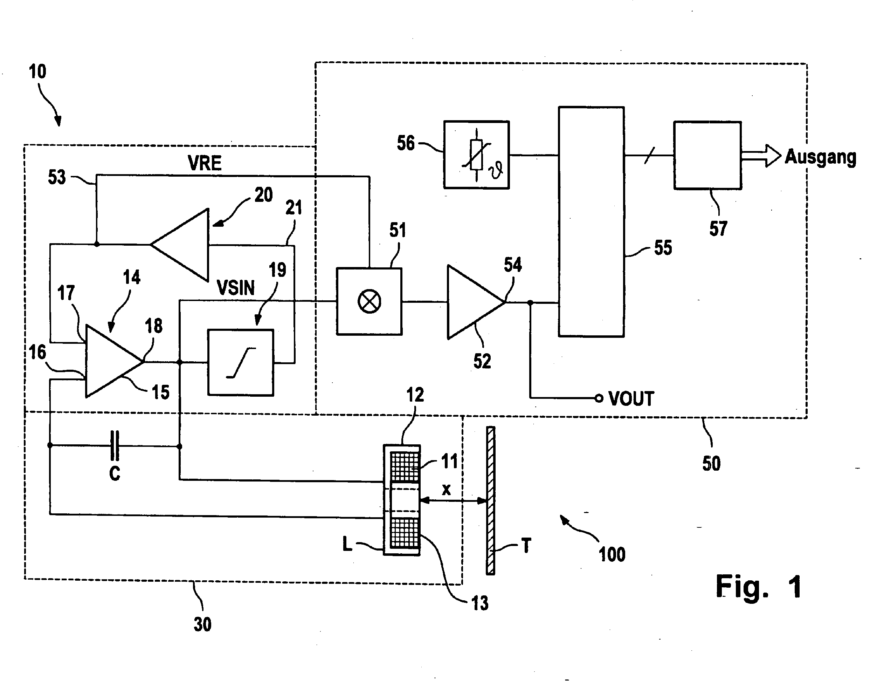

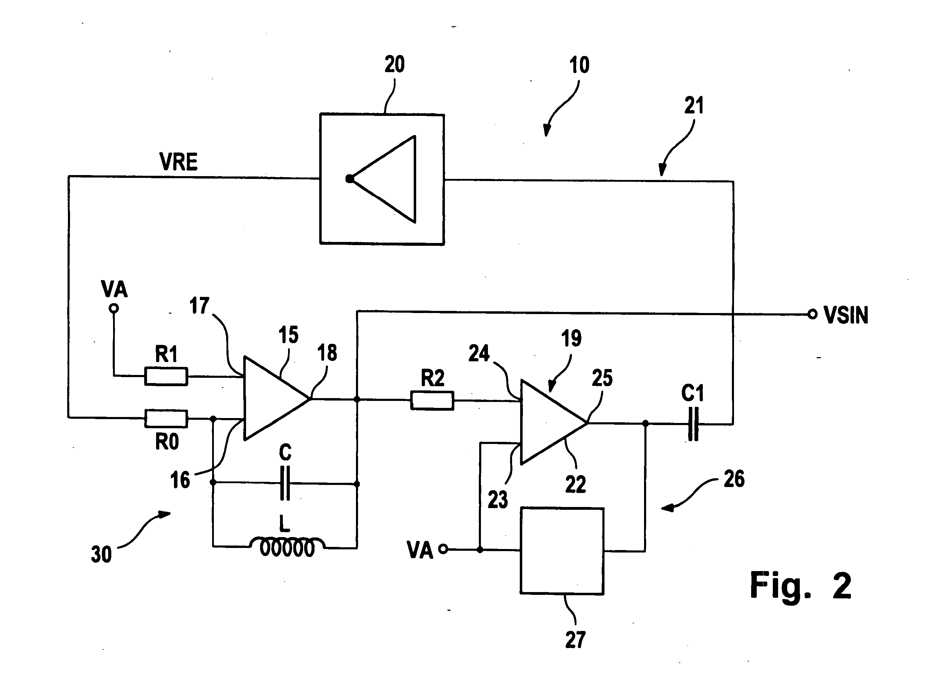

Die Vorrichtung 100 zur Bestimmung der Nickposition eines Fahrzeugs umfasst einen Oszillator 10 mit einem Schwingkreis 30 und einer Auswertschaltung 50. Figur 1 zeigt ein vereinfachtes Blockschaltbild von Oszillator 10 und Auswertschaltung 50. Ein detailliertes Blockschaltbild des Oszillator 10 zeigt Figur 2.

Der Oszillator weist eine Sensorinduktivität L und eine Kapazität C (Kondensator) auf, die parallel geschaltet sind. Sensorinduktivität und Kapazität bilden den LC-Parallelschwingkreis 30. Die Sensorinduktivität L wird von einer Ringspule 11 gebildet, die in einem halboffenen Schalenkern 12 aus Ferritmaterial angeordnet ist. Der Abstand zwischen der Schalenkernoberfläche 13 an der offenen Seite des Schalenkerns 12 und dem metallischen Körper (Target T) ist mit x bezeichnet.

Zum Entdämpfen des Schwingkreises 30 weist der Oszillator 10 einen Verstärker 14 auf. Der Verstärker 14 umfasst einen Operationsverstärker 15 mit einem ersten und zweiten Eingang 16, 17 und einem Ausgang 18 (Fig. 2). Der LC-Parallelschwingkreis 30 ist parallel zum ersten Eingang 16 und Ausgang 18 des Operationsverstärkers 15 geschaltet. Über einen Widerstand R1 liegt die Versorgungsspannung VA an dem zweiten Eingang 17 des Operationsverstärkers 15 an.

Zum Anregen des Schwingkreises 30 weist der Oszillator 10 einen Rückkopplungszweig 21 auf, der einen Pulsformer 19, einen invertierenden Treiber 20 und einen Kondensator C 1 enthält, die in Serie geschaltet sind. Der Rückkopplungszweig 21 verbindet den Ausgang 18 des Operationsverstärkers 15 über einen Widerstand R0 mit dem ersten Eingang 16 des Operationsverstärkers 15.

Der Pulsformer 19 erzeugt aus der sinusförmigen Wechselspannung VSIN, die an dem LC-Parallelschwingkreis 30 bzw. Ausgang 18 des Operationsverstärkers 15 anliegt, ein annähernd rechteckförmiges Signal, aus dem der invertierende Treiber 20 ein exaktes Rechtecksignal VRE erzeugt, das den LC-Parallelschwingkreis 30, der in der Gegenkopplung des Verstärkers 14 liegt, über den Widerstand R0 ansteuert. Da das Rechtecksignal VRE eine konstante Amplitude hat, ist auch der Strom im Schwingkreis konstant. Die Amplitude der sinusförmigen Wechselspannung VSIN am Ausgang des Operationsverstärkers 15 kann direkt über R0 eingestellt werden.

Der Pulsformer 19 weist einen Operationsverstärker 22 mit einem ersten und zweiten Eingang 23, 24 und einem Ausgang 25 auf. Ein Gegenkopplungszweig 26, der eine Gegenkopplungsschaltung 27 enthält, verbindet den Ausgang 25 des Operationsverstärkers 22 mit dessen ersten Eingang 23. Die Gegenkopplungschaltung 27 dient dazu, die Anstiegszeit des Pulsformers so zu begrenzen, dass störende Überschwinger und unnötig steile Signalflanken vermieden werden. Auf Grund der "Über-Alles"-Gegenkopplung der Schaltung entspricht die Schwingfrequenz immer der durch die LC-Kombination des Schwingkreises vorgegebenen Resonanzfrequenz. Die Verstärkungseigenschaften des Pulsformers sind so ausgelegt, dass die bei maximaler Dämpfung des Schwingkreises auftretenden, minimalen Signalamplituden des Oszillationssignals VSIN noch hinreichend erkannt und verstärkt werden können. Damit wird gewährleistet, dass die Schwingung des Oszillators nicht abreißt.

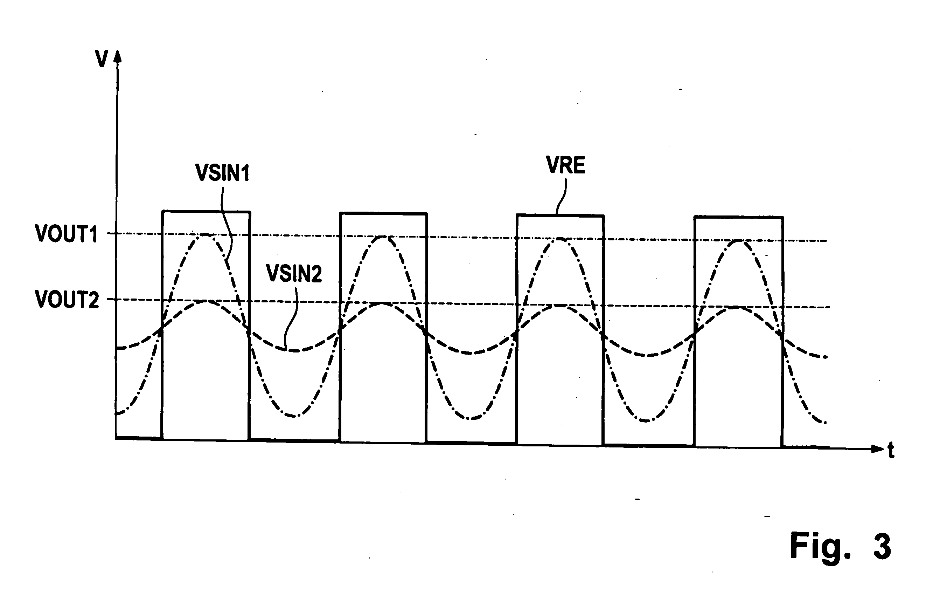

Figur 3 zeigt die Signalverläufe für VRE und VSIN für einen ersten und einen zweiten Abstand x zwischen der Oberfläche 13 des Schalenkerns 12 der Sensorinduktivität L und dem Target T. Hier steht VSIN 1 für ein Oszillatorsignal mit großer Signalamplitude, d.h. geringer Dämpfung des Schwingkreises und somit großem Messabstand x.

Die Auswertschaltung 50 der Vorrichtung 100 zur Bestimmung der Nickposition weist einen Synchrongleichrichter 51 und einen Treiber 52 auf, die am Ausgang 18 des Operationsverstärkers 15 in Serie geschaltet sind. Der Synchrongleichrichter 51 ist über einen weiteren Rückkopplungszweig 53 mit dem zweiten Eingang 17 des Operationsverstärkers 15 verbunden. Am Ausgang 54 des Treibers 52 liegt eine Gleichspannung VOUT an, deren Betrag von dem Messabstand x abhängt.

Zur Temperaturkompensation und Linearisierung weist die Auswertschaltung 50 einen Mikrocontroller 55 auf, der das Temperatursignal eines Temperatursensors 56 empfängt. Der Mikrocontroller 55 übt die zur Temperaturkompensation und Linearisierung der Gleichspannung VOUT nötigen Operationen aus.

Zur Übertragung des linearisierten und temperaturkompensierten Signals an eine Einrichtung zur Regulierung der Leuchtweite der Fahrzeugscheinwerfer in Abhängigkeit von der Nickposition des Fahrzeug weist die Auswerteinrichtung 50 noch eine Schnittstelle 57 auf. Am Ausgang der Schnittstelle 57 liegt nunmehr das Messsignal an, das mit dem Messabstand x korreliert.

Die zu VSIN 1 und VSIN 2 für die beiden Messabstände gehörenden Gleichspannungswerte VOUT 1 und VOUT 2 des Gleichspannungssignals VOUT zeigt Figur 3. Deutlich ist zu erkennen, dass der Betrag der Gleichspannung mit zunehmendem Messabstand x ansteigt.

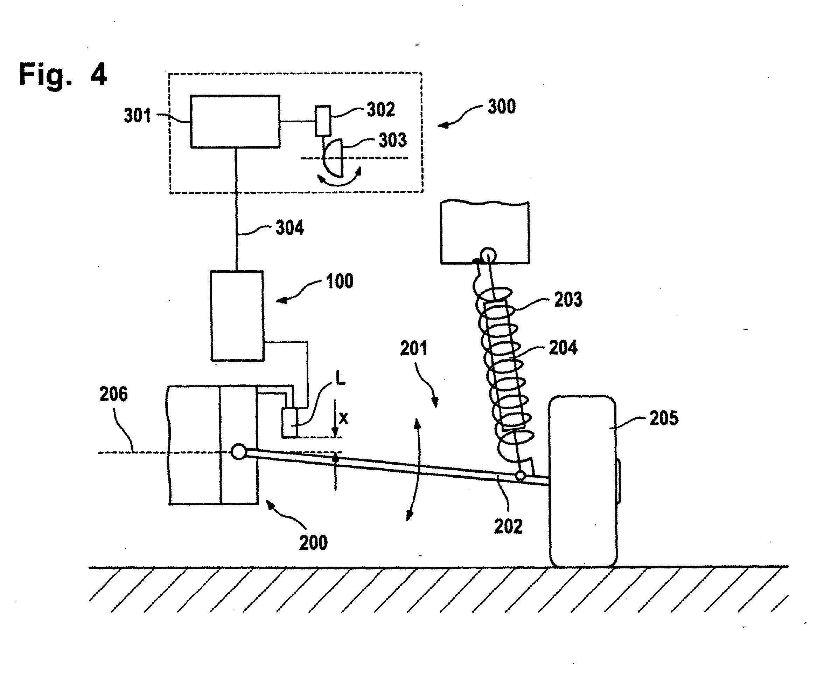

Nachfolgend wird ein Fahrzeug mit einer Einrichtung 300 zur Regulierung der Leuchtweite der Fahrzeugscheinwerfer in Abhängigkeit von der Nickposition des Fahrzeugs und der Vorrichtung 100 zur Bestimmung der Nickposition gemäß der Figuren 1-3 unter Bezugnahme auf Figur 4 beschrieben. In Figur 4 sind die Teile, die den Teilen der Figuren 1-3 entsprechen, mit den gleichen Bezugszeichen versehen. Da die wesentlichen Komponenten eines Fahrzeugs, beispielsweise Chassis, Fahrwerk, Motor etc. allgemein bekannt sind, zeigt Figur 4 der besseren Übersichtlichkeit halber nur die hier relevanten Komponenten.

Das Chassis und das Fahrwerk des Fahrzeugs sind mit den Bezugszeichen 200 und 201 bezeichnet. Das Fahrwerk 201 umfasst vordere und hintere Querlenker 202 aus Stahl oder Aluminium, die an dem Chassis 200 angelenkt sind. Figur 4 zeigt der besseren Übersichtlichkeit halber nur einen Querlenker. Das zugehörige Federbein und der Stossdämpfer sowie das Rad sind mit den Bezugszeichen 203, 204 und 205 bezeichnet. Der Querlenker 202 stellt ein in bezug auf die horizontale Ebene 206 des Fahrzeugs, d.h. die Geländeoberfläche bei ebenem Gelände, bewegliches Fahrzeugteil dar, während das Chassis 200 ein bezüglich der Ebene ortsfestes Fahrzeugteil ist.

Die Sensorinduktivität L der Vorrichtung 100 zur Bestimmung der Nickposition des Fahrzeugs ist an dem bezüglich der Ebene 206 ortsfesten Chassis 200 angebracht. Dem halboffenen Schalenkern 12 der Ringspule 13 der Sensorinduktivität L liegt der Querlenker 202 aus Metall gegenüber.

Die Signalübertragung zwischen der Vorrichtung 100 zur Bestimmung der Nickposition und der Einrichtung 300 zur Regulierung der Leuchtweite erfolgt über einen Datenbus 304.

Die Einrichtung 300 zur Leuchtweitenregulierung weist ein Steuergerät 301 auf, das einen Stellmotor 302 ansteuert, der die Neigung eines Scheinwerfers 303 gegenüber der Bezugsebene 206 in Abhängigkeit von der Nickposition einstellt.

Neigt sich beispielsweise das Fahrzeug gegenüber der Horizontalebene nach unten, steuert das Steuergerät 301 den Stellmotor 302 derart an, dass der Scheinwerfer 303 nach oben bewegt wird. Bei einer Neigung des Fahrzeugs gegenüber der Horizontalebene nach oben erfolgt eine Korrektur in entgegengesetzter Richtung.

## Patentansprüche

1. Vorrichtung zur Erfassung der Position eines ersten Fahrzeugteils in bezug auf ein zweites Fahrzeugteil, insbesondere zur Bestimmung der Nickposition eines Fahrzeugs für die Regulierung der Leuchtweite der Fahrzeugscheinwerfer, mit einem induktiven Messsystem (100) zum berührungslosen Bestimmen des Abstandes x zwischen dem ersten und zweiten Fahrzeugteil, das einen freischwingenden Oszillator (10) aufweist, der einen Schwingkreis (30) aufweist, der eine Sensorinduktivität L enthält, die an einem der beiden Fahrzeugteile anzuordnen ist,
**dadurch gekennzeichnet,**
**dass** der Oszillator (10) zur Entdämpfung des Schwingkreises (30) einen Verstärker (15) aufweist, wobei der Schwingkreis in die Gegenkopplung des Verstärkers geschaltet ist, und
der Oszillator (10) zur Anregung des Schwingkreises (30) einen zwischen Ausgang (18) und Eingang (16) des Verstärkers (15) geschalteten Rückkopplungszweig (21) aufweist, der Mittel (19, 20) zum Erzeugen eines Rechteckspannungssignals (VRE) aus einem Wechselspannungssignal (VSIN) enthält.

2. Vorrichtung nach Anspruch 1,
**dadurch gekennzeichnet, dass** die Mittel zum Erzeugen eines Rechteckspannungssignals aus einem Wechselspannungssignal einen Pulsformer (19) und einen Treiber (20) aufweisen, die in Serie geschaltet sind.

3. Vorrichtung nach Anspruch 1 oder 2,
**dadurch gekennzeichnet, dass** der Schwingkreis (30) eine Parallelschaltung aus der Sensorinduktivität L und einer Kapazität C ist.

4. Vorrichtung nach Angaben der Ansprüche 1-3,
**dadurch gekennzeichnet, dass** die Sensorinduktivität L eine Ringspule (13) ist, die in einem halboffenen Schalenkem (12) angeordnet ist.

5. Vorrichtung nach Angaben der Ansprüche 1 - 4,
**dadurch gekennzeichnet, dass** eine Auswertschaltung (50) vorgesehen ist, die aus dem vom Oszillator (10) erzeugten Wechselspannungssignal VSIN ein mit dem Abstand, insbesondere mit der Nickposition des Fahrzeugs, korrelierendes elektrisches Messsignal erzeugt.

6. Vorrichtung nach Anspruch 5,
**dadurch gekennzeichnet, dass** die Auswertschaltung (50) Mittel (51) zum Gleichrichten des vom Oszillator (10) erzeugten Wechselspannungssignals VSIN aufweist.

7. Vorrichtung nach Anspruch 5 oder 6,
**dadurch gekennzeichnet, dass** die Auswertschaltung (50) Mittel (55,56) zur Linearisierung und/oder Temperaturkompensation aufweist.

8. Vorrichtung nach Anspruch 7,
**dadurch gekennzeichnet, dass** die Mittel zur Linearisierung und/oder Temperaturkompensation einen Mikrocontroller (55) aufweisen.

9. Fahrzeug mit einer Einrichtung (300) zur Regulierung der Leuchtweite der Fahrzeugscheinwerfer (303) in Abhängigkeit von der Nickposition des Fahrzeugs und einer Vorrichtung (100) nach einem der Ansprüche 1-12, wobei das Fahrzeug in bezug auf eine horizontale Ebene (206) ortsfeste Fahrzeugteile (200) und gegenüber der horizontalen Ebene bewegliche Fahrzeugteile (202) aufweist, die einander gegenüberliegend angeordnet sind, **dadurch gekennzeichnet, dass** die Sensorinduktivität L an einem ortsfesten oder beweglichen Fahrzeugteil (200, 202) angeordnet ist, wobei das der Sensorinduktivität gegenüberliegende Fahrzeugteil (202, 201) ein Metallteil ist.

10. Fahrzeug nach Anspruch 9,
**dadurch gekennzeichnet, dass** die Sensorinduktivität L an einem ortsfesten Fahrzeugteil (202) angeordnet ist, wobei das bewegliche Fahrzeugteil ein der Sensorinduktivität gegenüberliegender Querlenker (202) des Fahrzeugs ist.

## Claims

1. Arrangement for sensing the position of a first vehicle component relative to a second vehicle component, and in particular for determining the position of a vehicle in pitch for the purpose of regulating the range covered by the vehicle's headlights, having an inductive measuring system (100) for the non-contacting determination of the distance x between the first and second vehicle components, which inductive measuring system (100) has a freely oscillating oscillator (10) having an oscillating circuit (30) which includes a sensing inductor L which is to be arranged on one of the two vehicle components,
**characterised in that**
the oscillator (10) has an amplifier (15) to reduce the damping of the oscillating circuit (30), the oscillating circuit being connected into the negative-feedback circuit of the amplifier, and
to excite the oscillating circuit (30), the oscillator (10) has a negative-feedback circuit (21) which is connected between the output (18) and input (16) of the amplifier (15) and which includes means (19, 20) for generating a square-wave voltage signal (VRE) from an a.c. voltage signal (VSIN).

2. Arrangement according to claim 1, **characterised in that** the means for generating a square-wave voltage signal from an a.c. voltage signal have a pulse-shaper (19) and a driver (20) which are connected in series.

3. Arrangement according to claim 1 or 2, **characterised in that** the oscillating circuit (30) is a parallel circuit comprising the sensing inductor L and a capacitor C.

4. Arrangement according to the details given in claims 1 - 3, **characterised in that** the sensing inductor L is an annular coil (13) which is arranged in a semi-open pot-type core (12).

5. Arrangement according to the details given in claims 1 - 4, **characterised in that** an analysing circuit (50) is provided which generates, from the a.c. voltage signal VSIN generated by the oscillator (10), an electrical measurement signal which correlates with the distance, and in particular with the position of the vehicle in pitch.

6. Arrangement according to claim 5, **characterised in that** the analysing circuit (50) has means (51) for rectifying the a.c. voltage signal VSIN generated by the oscillator (10).

7. Arrangement according to claim 5 or 6, **characterised in that** the analysing circuit (50) has means (55, 56) for linearisation and/or temperature compensation.

8. Arrangement according to claim 7, **characterised in that** the means for linearisation and/or temperature compensation have a micro-controller (55).

9. Vehicle having a means (300) for regulating the range covered by the vehicle's headlights (303) as a function of the position of the vehicle in pitch and having an arrangement (100) according to one of claims 1 - 12, the vehicle having components (200) which are fixed relative to a horizontal plane (206) and components (202) which are movable relative to the horizontal plane, which components (200, 202) are arranged opposite one another, **characterised in that** the sensing inductor L is arranged on a fixed or movable vehicle component (200, 202), the vehicle component (202, 201) which is situated opposite the sensing inductor being a metal component.

10. Vehicle according to claim 9, **characterised in that** the sensing inductor L is arranged on a fixed vehicle component (202), the movable vehicle component being a suspension arm (202) of the vehicle which is situated opposite the sensing inductor.

## Revendications

1. Dispositif de détection de la position d'un premier élément de véhicule par rapport à un deuxième élément de véhicule, notamment pour déterminer la position de tangage d'un véhicule pour la régulation de la portée des phares du véhicule, avec un système de mesure (100) inductif pour déterminer sans contact la distance x entre le premier et le deuxième éléments du véhicule qui présente un oscillateur (10) en oscillation libre qui présente un circuit oscillant (30) qui contient une inductance sensorielle L qui doit être disposée sur l'un des deux éléments de véhicule, **caractérisé en ce que** l'oscillateur (10) présente un amplificateur (15) pour compenser l'amortissement du circuit oscillant (30), le circuit oscillant étant monté dans le couplage antagoniste de l'amplificateur, et l'oscillateur (10) présente une branche de couplage en retour (21) montée entre la sortie (18) et l'entrée (16) de l'amplificateur (15) pour exciter le circuit oscillant (30), laquelle contient des moyens (19, 20) pour générer un signal de tension rectangulaire (VRE) depuis un signal de tension alternative (VSIN).

2. Dispositif selon la revendication 1, **caractérisé en ce que** les moyens pour générer un signal de tension rectangulaire depuis un signal de tension alternative présentent un dispositif de formation d'impulsions (19) et un dispositif excitateur (20) qui sont montés en série.

3. Dispositif selon la revendication 1 ou 2, **caractérisé en ce que** le circuit oscillant (30) est un circuit parallèle composé de l'inductance sensorielle L et d'une capacité C.

4. Dispositif selon les indications des revendications 1 à 3, **caractérisé en ce que** l'inductance sensorielle L est une bobine toroïdale (13) qui est disposée dans un noyau de coque (12) semi-ouvert.

5. Dispositif selon les indications des revendications 1 à 4, **caractérisé en ce qu'**un circuit d'évaluation (50) est prévu, lequel génère depuis le signal de tension alternative VSIN généré par l'oscillateur (10) un signal de mesure électrique en corrélation avec la distance, notamment avec la position de tangage du véhicule.

6. Dispositif selon la revendication 5, **caractérisé en ce que** le circuit d'évaluation (50) présente des moyens (51) pour redresser le signal de tension alternative VSIN généré par l'oscillateur (10).

7. Dispositif selon la revendication 5 ou 6, **caractérisé en ce que** le circuit d'évaluation (50) présente des moyens (55, 56) de linéarisation et/ou de compensation de la température.

8. Dispositif selon la revendication 7, **caractérisé en ce que** les moyens de linéarisation et/ou de compensation de la température présentent un microcontrôleur (55).

9. Véhicule doté d'un dispositif (300) de régulation de la portée des phares de véhicule (303) en fonction de la position de tangage du véhicule et d'un dispositif (100) selon l'une quelconque des revendications 1 à 8, le véhicule présentant des éléments de véhicule (200) fixés par rapport à un plan (206) horizontal et des éléments de véhicule (202) mobiles par rapport au plan horizontal qui sont disposés de manière opposée, **caractérisé en ce que** l'inductance sensorielle L est disposée sur un élément de véhicule (200, 202) fixe ou mobile, l'élément de véhicule (202, 201) opposé à l'inductance sensorielle étant un élément métallique.

10. Véhicule selon la revendication 9, **caractérisé en ce que** l'inductance sensorielle L est disposée sur un élément de véhicule (202) fixe, l'élément de véhicule mobile étant un bras oscillant transversal (202) du véhicule opposé à l'inductance sensorielle.
